# EUROPÄISCHE PATENTSCHRIFT

(11) **EP 4 055 446 B1**
(45) Veröffentlichungstag und Bekanntmachung des Hinweises auf die Patenterteilung: **23.07.2025**
(21) Anmeldenummer: 20797730.7
(22) Anmeldetag: 27.10.2020
(51) Int. Cl.: G03H 1/20, B29C 43/00, B29C 43/12, B29C 43/32, B29C 43/36, B32B 1/00, B32B 37/10, B29C 33/38, G03H 1/02, G03H 1/04

(54) **VERFAHREN ZUM HERSTELLEN EINES HOLOGRAMMS AUF EINER GEBOGENEN SUBSTRATSCHEIBE, RESULTIERENDE SUBSTRATSCHEIBE MIT HOLOGRAMM UND EIN DIESE ENTHALTENDEN SCHEIBENVERBUND, INSBESONDERE FAHRZEUGSCHEIBE**
METHOD FOR PRODUCING A HOLOGRAM ON A CURVED SUBSTRATE PLATE, RESULTING SUBSTRATE PLATE WITH HOLOGRAM AND A LAMINATE, IN PARTICULAR A VEHICLE WINDSCREEN, CONTAINING SAID SUBSTRATE PLATE
PROCÉDÉ DE PRODUCTION D'UN HOLOGRAMME SUR UNE PLAQUE DE SUBSTRAT INCURVÉE, PLAQUE DE SUBSTRAT OBTENUE AVEC L'HOLOGRAMME, ET STRATIFIÉ, EN PARTICULIER UN PARE-BRISE DE VÉHICULE, CONTENANT LADITE PLAQUE DE SUBSTRAT

(30) Priorität: 07.11.2019 DE 102019130021
(43) Veröffentlichungstag der Anmeldung: 14.09.2022
(73) Patentinhaber: Bayerische Motoren Werke Aktiengesellschaft, 80809 München (DE)
(72) Erfinder: SOLCHENBACH, Tobias, 80992 München (DE); PINSKER, Martin, 84079 Bruckberg (DE)
(86) Internationale Anmeldenummer: PCT/EP2020/080107
(87) Internationale Veröffentlichungsnummer: WO 2021/089362

(56) Entgegenhaltungen:
- US-A- 5 227 176
- US-A1- 2010 143 525
- US-B2- 9 285 588
- US-B2- 9 321 226

## Beschreibung

### Technisches Gebiet

Die Erfindung betrifft, allgemein gesehen, Verfahren zum Herstellen eines Hologramms und richtet sich dabei insbesondere auf die Integration eines Hologramms zwischen zwei gebogenen Scheiben in einem Scheibenverbund, beispielsweise in einer Fahrzeugscheibe, sowie auf ein damit ausgestattetes Fahrzeug. Das Fahrzeug kann ein beliebiges Land-, Luft- oder Wasserfahrzeug, insbesondere ein Kraftfahrzeug, sein. Beim Hologramm kann es sich insbesondere um ein holografisch optisches Element (HOE) handeln, das beispielsweise als Element einer Blickfeldanzeigevorrichtung in einer Frontscheibe des Fahrzeugs integriert werden soll.

### Technischer Hintergrund

Blickfeldanzeigevorrichtungen in einem Fahrzeug sind insbesondere unter der Bezeichnung Head-Up-Display (HUD) bekannt. Damit wird ein Anzeigeinhalt, beispielsweise eine Angabe über eine Geschwindigkeitsbegrenzung oder andere Navigations- und Fahrzeugbedienungshinweise, in Form eines virtuellen Anzeigebilds dem vom Fahrer beobachteten realen Umgebungsbild vor dem Fahrzeug überlagert. Hierzu umfasst eine Blickfeldanzeigevorrichtung in der Regel eine in der Instrumententafel eingebaute Projektionseinheit, die ein Projektionslichtstrahlenbündel mit gewünschtem Anzeigeinhalt erzeugt und es auf die Frontscheibe des Fahrzeugs projiziert, von welcher es zum Fahrer hin reflektiert wird.

Um dem Fahrer eine Augenanpassung beim Blickwechsel zwischen der vorausliegenden Straße und der abzulesenden Anzeige weitgehend zu ersparen, wird das virtuelle Anzeigebild dabei typischerweise in einiger Entfernung vor dem Fahrzeug erzeugt. Um diese und andere Abbildungseigenschaften zu erreichen, sind Projektionseinheiten bei Head-Up-Displays für den Automobilbereich klassisch mittels konkaver Spiegel aufgebaut, deren Größe jedoch linear mit der Bildgröße des virtuellen Anzeigebilds und eines damit abdeckbaren Blickfelds (auch Field-of-View, FoV genannt) skaliert. Um das abdeckbare Field-of-View beispielsweise für eine an realen Umgebungsobjekten orientierte kontaktanaloge AR-Anzeige (Augmented Reality) deutlich zu erweitern, müsste bei der klassischen HUD-Bauweise ein entsprechend großer Konkavspiegel in der Instrumententafel integriert werden, was zu Problemen für den verfügbaren Bauraum im Fahrzeuginnenraum oder auch für dessen Erscheinungsbild führt, da wiederum eine entsprechend große Öffnung für das austretende Projektionslichtstrahlenbündel in der Instrumententafel erforderlich wäre.

Zur Überwindung derartiger Probleme sind für Blickfeldanzeigevorrichtungen in Kraftfahrzeugen Ansätze bekannt, in die Frontscheibe eines Fahrzeugs ein holografisch optisches Element (HOE) zu integrieren, das beispielsweise die optische Funktion eines für die klassische Projektionseinheit üblichen Konkavspiegels übernimmt. Damit wird eine kompaktere HUD-Bauart ohne Konkavspiegel ermöglicht, die auch als holografisches Head-up-Display bekannt ist. Bei etwa aus US 4,998,784 A bekannten Ansätzen wird ein Hologramm zunächst als eine flache Folie mit erforderlichen optischen Eigenschaften auf einem separaten Substrat hergestellt und dann zwischen zwei Glasscheiben eines für Fahrzeugscheiben typischen VSG-Aufbaus (Verbund-Sicherheitsglas) mithilfe eines diese verbindenden Schmelzklebstoffs PVB (Polyvinylbutyral) einlaminiert.

Beim Laminieren von derartigen fertigen HOE-Folien in einem Scheibenverbund sind sie allerdings hohen Drücken und Temperaturen ausgesetzt, welche sich negativ auf die Materialeigenschaften und die Beständigkeit des Hologramms auswirken. Weiterhin ist das Laminieren eines als flacher Film hergestellten Hologramms in eine 3D-gebogene Geometrie einer Fahrzeugscheibe in der Regel nicht ohne Knittern oder Faltenwerfen der HOE-Folie möglich. Dies beeinträchtigt jedoch die üblicherweise vor dem Einlaminieren, meist in einem Rolle-zu-Rolle-Prozess, erzeugte optische Funktion des Hologramms erheblich.

Alle Versuche, ein hologrammaufnahmefähiges Material, etwa in Form einer holographischen Folie, noch vor dem Belichten in ein Verbundglas zu laminieren und erst danach dort ein Hologramm bzw. ein HOE einzubelichten, erfordern massive Eingriffe in den Verbundglas-Herstellungsprozess und sind aufgrund der Anforderungen des Belichtungsprozesses wie Temperaturstabilität, Vibrationsfreiheit, dunkle Umgebung etc. kaum industriell umsetzbar.

Andererseits ist insbesondere für Banknoten oder Ausweisdokumente eine Hologrammherstellungsmethode durch Anfertigung sogenannter "Kontaktkopien" als besonders sinnvoll für eine Massenanfertigung bekannt. Dabei wird eine Hologrammaufnahmeschicht aus einem Fotopolymer flüssig auf ein Substrat, beispielsweise einen Film oder eine Folie, aufgebracht und im direkten Kontakt mit einem Master-Hologramm (auch Holografie-Master genannt) in Reflexion belichtet und dadurch kopiert, d. h. repliziert. Mit anderen Worten wird dabei ein Holografie-Master, der in der Regel ein Oberflächenhologramm ist, für die wiederholte Herstellung eines Hologramms verwendet, das in der Regel als ein Volumenhologramm in der Fotopolymerschicht ausgebildet wird. Erst bei der Belichtung und einer anschließenden Fixierung mit UV-Licht härtet das flüssige Fotopolymer aus.

Die Schichtdicke des flüssigen Fotopolymers ist bei dieser Methode mit einer Genauigkeit von unter 10 Mikrometern einzustellen. In diesem Zusammenhang spielen geometrische Toleranzen zwischen dem Substrat und dem Holografie-Master eine große Rolle, da zum einen der Master für die Dauer der Hologrammaufnahme vollflächig in Kontakt mit dem Fotopolymer sein muss und zum anderen der Abstand von Master und Substrat die genannte Schichtdicke der Fotopolymerschicht bestimmt. Bei einer ebenen Geometrie können die für die Hologrammaufnahme erforderlichen konstanten Abstände zwischen einem flachen Substrat und einem flachen Holografie-Master problemlos präzise eingestellt werden, etwa in einem Rolle-zu-Rolle-Prozess. Bei bekannten Verfahren ist das Substrat in der Regel als ein flacher Film oder als eine flache Folie, d. h. nicht gebogen, ausgebildet, während der Holografie-Master in der Regel ein metallisches, steifes Bauteil ist, welches nicht flexibel ist und somit keine Substrattoleranzen ausgleichen kann.

US 9 321 226 B2 offenbart eine gebogene Substratscheibe aus Plastik mit einer integrierten (Volumen-)Hologrammschicht.

US 5 227 176 A, US 2010/143525 und US 9 285 588 B2 offenbaren Verfahren zum Herstellen eines Hologramms.

Es ist Aufgabe der vorliegenden Erfindung, zur Lösung der obigen Probleme ein alternatives oder verbessertes Verfahren zum Herstellen eines Hologramms anzugeben, das dessen Integration in einem Scheibenverbund mit dreidimensional gebogenen Scheiben, insbesondere in einer Fahrzeugscheibe, ermöglicht. Es ist auch Aufgabe der Erfindung, einen entsprechenden Scheibenverbund und ein damit ausgestattetes Fahrzeug anzugeben.

### Offenbarung der Erfindung

Diese Aufgabe wird durch ein Verfahren zum Herstellen eines Hologramms auf einer gebogenen Substratscheibe gemäß Anspruch 1 sowie eine resultierende gebogene Substratscheibe mit einem nach diesem Verfahren hergestellten Hologramm gemäß Anspruch 8, eine diese enthaltende Fahrzeugscheibe, und ein damit ausgestattetes Fahrzeug gemäß den nebengeordneten Ansprüchen gelöst. Weitere Ausgestaltungen sind in den abhängigen Ansprüchen angegeben. Alle in den Ansprüchen und der Beschreibung für das Hologrammherstellungsverfahren genannten weiterführenden Merkmale und Wirkungen gelten auch in Bezug auf die Substratscheibe, die Fahrzeugscheibe und das Fahrzeug mit einem so hergestellten Hologramm, wie auch umgekehrt.

Dabei ist die Reihenfolge, in der die einzelnen Verfahrensschritte beschrieben sind, jeweils als nicht bindend zu verstehen, sofern nichts Gegenteiliges erwähnt ist. Vielmehr können einzelne Schritte des hierin dargelegten Verfahrens, wenn geeignet, jeweils auch in einer anderen Reihenfolge als beschrieben ausgeführt werden, um zu dem gleichen genannten Ergebnis zu gelangen. Dabei kann die Durchführungsreihenfolge beispielsweise je nach Ausführungsform des Verfahrens und/oder je nach spezifischen Anforderungen eines Anwendungsfalls variieren. Einige Beispiele hierzu sind weiter unten angegeben.

Gemäß einem ersten Aspekt ist ein Verfahren zum Herstellen eines Hologramms auf einer gebogenen Substratscheibe vorgesehen gemäß Anspruch 1.

Die gebogene Substratscheibe kann dabei insbesondere als fester Bestandteil eines zukünftigen Bauteils, etwa einer Fahrzeugscheibe, dienen, das mit dem Hologramm ausgestattet werden soll, und besitzt daher eine von flacher oder ebener Geometrie abweichende dreidimensional gebogene geometrische Form dieses Bauteils. Die gebogene Substratscheibe kann grundsätzlich aus jedem für die nachfolgende Belichtung des Hologramms geeigneten Material gefertigt sein, beispielsweise aus Glas oder Kunststoff. Sie kann also insbesondere starr ausgebildet sein.

Beim Hologramm kann es sich insbesondere um ein holografisch optisches Element (HOE) handeln, das beispielsweise als Element einer Blickfeldanzeigevorrichtung der eingangs beschriebenen Art, insbesondere eines Head-Up-Displays (HUD), in einer Frontscheibe des Fahrzeugs integriert werden soll, um etwa die Funktion eines Konkavspiegels zu übernehmen. Alternativ sind mit dem vorliegenden Hologrammherstellungsverfahren auch andere optische Funktionen des auf der gebogenen Substratscheibe erzeugten HOE realisierbar, beispielsweise ein winkelselektives Diffusor-Hologramm zur Darstellung von Anzeigeinhalten direkt auf der resultierenden (Fahrzeug-)Scheibe, die dadurch als eine Art Leinwand dienen kann, oder ein Auskoppel-Hologramm für ein Waveguide-HUD, bei dem ein flächiges Waveguide in der Frontscheibe zur Darstellung von Inhalten ausgebildet ist. Das Fahrzeug kann dabei ein beliebiges Land-, Luft- oder Wasserfahrzeug, insbesondere ein Kraftfahrzeug, sein.

Das Verfahren umfasst dabei folgende Schritte:
- Bereitstellen der genannten dreidimensional gebogenen Substratscheibe, die als Teil eines zukünftigen Bauteils, insbesondere einer Fahrzeugscheibe, toleranzbehaftet ist und eine für die Hologrammherstellung vorgesehene Substratoberfläche aufweist, deren Ist-Geometrie einer Toleranzabweichung gegenüber einer vorbestimmten Soll-Geometrie unterliegt;
- Bereitstellen eines aufblasbaren Kissens mit einer durch Druckeinwirkung verformbaren Kissenoberfläche, die zu der vorbestimmten Soll-Geometrie oder mit einer vorbestimmten Abweichung von dieser, beispielsweise unter- oder überbombiert, vorgeformt ist,
- Aufbringen eines Holografie-Masters, der beispielsweise als wiederverwendbares Negativ des aufzunehmenden Hologramms dient, in Form einer flexiblen Dünnschicht auf die verformbare Kissenoberfläche;
- Aufbringen einer Hologrammaufnahmeschicht, insbesondere einer flüssigen Fotopolymerschicht, auf die Substratoberfläche;
- Andrücken oder Anlegen des Holografie-Masters an die Hologrammaufnahmeschicht mittels der zur genannten Ist-Geometrie der Substratoberfläche verformten Kissenoberfläche, wodurch ein durchgehender Flächenkontakt zwischen dem Holografie-Master und der Hologrammaufnahmeschicht bei einer im Wesentlichen konstanten vorbestimmten Schichtdicke der Hologrammaufnahmeschicht erzielt wird und Fixieren/Halten dieser Hologrammaufnahmeanordnung für eine vorbestimmte Belichtungszeit, die zur Hologrammaufnahme erforderlich ist.

Das Hologramm wird nun durch das Belichten der Hologrammaufnahmeschicht in dieser Hologrammaufnahmeanordnung mit einem geeigneten kohärenten Licht, beispielsweise rückseitig durch die Substratscheibe hindurch, erzeugt. Insbesondere kann der Holografie-Master als ein Oberflächenhologramm ausgebildet sein. Das Hologramm kann insbesondere als ein Volumenhologramm in der Hologrammaufnahmeschicht ausgebildet werden, indem es, wie beschrieben, im direkten Kontakt mit dem Holografie-Master in Reflexion belichtet und dadurch kopiert, d. h. repliziert wird. Neben seiner Funktion als Hologramm-Negativ kann der gegen die Hologrammaufnahmeschicht gehaltene Master auch zur Gewährleistung der erforderlichen Vibrationsfreiheit für die Dauer der Belichtung beitragen, die je nach Anwendung bis zu einigen Minuten betragen kann. Je nach verwendetem Hologrammaufnahmematerial kann die Hologrammaufnahmeschicht anschließend beispielsweise mit geeignetem inkohärentem Licht, etwa mit UV-Licht, fixiert werden. Erst bei der Belichtung und einer anschließenden Fixierung mit UV-Licht härtet beispielsweise das flüssige Fotopolymer aus. Nach der beschriebenen Fertigstellung des Hologramms in der Hologrammaufnahmeschicht wird der Master von dieser wieder entfernt.

Eine Idee des vorliegenden Verfahrens besteht darin, den Holografie-Master über das aufblasbare Kissen auf die toleranzbehaftete Ist-Geometrie der Substratscheibe, bzw. auf die darauf dünn aufgetragene Hologrammaufnahmeschicht, zu drücken. Damit wird die Hologrammherstellung direkt auf einer dreidimensional gebogenen Substratscheibe ermöglicht, die Teil eines zukünftigen Bauteils bildet, sodass das Hologramm gleich in der endgültigen Geometrie des Bauteils hergestellt wird und nicht nachträglich darauf laminiert und verformt werden muss, wie bei eingangs erwähnten herkömmlichen Verfahren. Zudem wird das Hologramm beim vorliegenden Verfahren direkt auf dem endgültigen Substrat hergestellt, das nicht später entfernt werden muss, und ist dadurch zusätzlich gegen etwaige Beschädigungen bei der späteren Handhabung in der Bauteilherstellung geschützt.

Möchte man dabei eine zur Fahrzeugverglasung, beispielsweise für die Frontscheibe, bestimmte Glasscheibe als Substrat verwenden, so unterliegt das gebogene starre Glas in der Regel Geometrietoleranzen von mehreren Zehntel Millimetern. Die Schichtdicke der Hologrammaufnahmeschicht, insbesondere des flüssigen Fotopolymers, ist aber bei der vorliegenden Hologrammaufnahmemethode mit einer Genauigkeit von unter 10 Mikrometern einzustellen, d. h. 10 bis 100mal genauer als die typische Geometrietoleranz einer gebogenen Glasscheibe. Dies macht einen Geometrietoleranzausgleich zwischen der Substratscheibe und dem Holografie-Master wichtig, da zum einen der Master für die Dauer der Hologrammaufnahme vollflächig in Kontakt mit der Hologrammaufnahmeschicht sein muss und zum anderen der Abstand von Master und Substratscheibe die genannte Schichtdicke der Hologrammaufnahmeschicht bestimmt.

Daher wird der Holografie-Master beim vorliegenden Verfahren flexibel ausgeführt und dünn auf eine vorgeformte Kissenoberfläche des aufblasbaren Kissens, etwa einer Polymer- oder Elastomer-Blase, aufgebracht, um sich der Geometrietoleranz der Substratscheibe anpassen zu können. Die vorgeformte Kissenoberfläche hat bereits die vorbekannte/vorbestimmte Soll-Geometrie der Substratscheibe oder eine von dieser Soll-Geometrie definiert abweichende Form, z. B. über- oder unterbombiert.

Um die oben beschriebene präzise Hologrammaufnahmeanordnung zu gewährleisten, wird vor oder bei dem Andrücken/Anlegen des Holografie-Masters an die Hologrammaufnahmeschicht eine geometrieausgleichende Verformung der genannten Kissenoberfläche von der vorbekannten Soll-Geometrie zu der tatsächlichen Ist-Geometrie jeder individuellen Substratscheibe herbeigeführt, beispielsweise indem diese Kissenoberfläche geometrisch exakt an die Ist-Geometrie der Substratscheibe gepresst wird. Dabei kann das aufblasbare Kissen als ein Ein- oder Mehrkammerprofil ausgeführt sein, um gegebenenfalls ein Entlüften zu vereinfachen.

Nachfolgend werden einige Beispiele für die Bewirkung dieser Verformung der vorgeformten Kissenoberfläche zu der Ist-Geometrie angegeben.

Insbesondere kann die Verformung der vorgeformten Kissenoberfläche zur Ist-Geometrie vor, bei oder nach dem Anlegen oder Andrücken des Kissens mit dem darauf aufgebrachten Holografie-Master an die Hologrammaufnahmeschicht dadurch bewirkt oder unterstützt werden, dass die vorgeformte Kissenoberfläche gegen die Substratoberfläche mit oder ohne die darauf aufgebrachte Hologrammaufnahmeschicht mit einer Druckkraft gedrückt wird, die insbesondere über die gesamte verformbare Kissenoberfläche im Wesentlichen konstant ist. Letzteres führt zu einer gleichmäßigen Druckbeaufschlagung der verformbaren Kissenoberfläche, beispielsweise während sich diese unter Ausbildung eines durchgehenden Flächenkontakts mit der vergleichsweise dünnen Hologrammaufnahmeschicht auf der Substratoberfläche an diese anschmiegt, wodurch die verformbare Kissenoberfläche deren Ist-Geometrie annimmt. Bei einer gleichmäßigen Druckverteilung über die verformbare Kissenoberfläche kann insbesondere auch der Kapillareffekt zur Einstellung einer durchgehend konstanten Schichtdicke der flüssigen Fotopolymerschicht beitragen.

Zusätzlich kann die Verformung der vorgeformten Kissenoberfläche zur Ist-Geometrie vor, bei oder nach dem Anlegen des Kissens mit dem darauf aufgebrachten Holografie-Master an die Hologrammaufnahmeschicht dadurch bewirkt oder unterstützt werden, dass das Kissen als Ganzes rückseitig mit einer geeigneten Kraft an die Substratoberfläche mit oder ohne die darauf aufgebrachte Hologrammaufnahmeschicht angedrückt wird. Die geeignete Druckkraft kann auf die von der vorgeformten Kissenoberfläche abgewandte Rückseite des Kissens insbesondere durch eine beliebige geeignete mechanische Vorrichtung ausgeübt werden, beispielsweise durch einen Federkraftarm oder einen hydraulisch betätigten Kolben. Auch dies kann zu einer gleichmäßigen Druckbeaufschlagung der verformbaren Kissenoberfläche führen, während sich diese unter Ausbildung eines durchgehenden Flächenkontakts mit der vergleichsweise dünnen Hologrammaufnahmeschicht auf der Substratoberfläche an diese anschmiegt, wodurch die verformbare Kissenoberfläche deren Ist-Geometrie annimmt. Insbesondere kann die genannte Kraft dabei über die Rückseite des Kissens gleichmäßig verteilt sein, etwa durch eine geeignete Druckplatte, die mit der genannten Kraft gegen das Kissen gedrückt wird.

Gemäß einer ersten Ausführungsform ist das aufblasbare Kissen mit einem Fluid, insbesondere Luft, gefüllt und weist mindestens ein Druckregulierungsventil zur Einstellung eines Fluiddrucks im Kissen auf. Das Fluid kann grundsätzlich beliebiges Gas, alternativ aber auch eine Flüssigkeit sein. Das Kissen wird zunächst mit einem vorbestimmten ersten Fluiddruck bereitgestellt, bei dem die verformbare Kissenoberfläche die oben genannte Soll-Geometrie oder eine vorbestimmte Abweichung von dieser, beispielsweise unter- oder überbombiert, aufweist. Die Verformung der so vorgeformten Kissenoberfläche zur Ist-Geometrie der Substratoberfläche wird hier durch eine Fluiddruckänderung im Kissen zu einem vorbestimmten zweiten Fluiddruck, der vom ersten Fluiddruck verschieden ist, bewirkt, während das Kissen mit dem darauf aufgebrachten Holografie-Master an der Substratoberfläche mit der darauf aufgebrachten Hologrammaufnahmeschicht anliegt oder rückseitig dagegen gedrückt wird. Diese Fluiddruckänderung im Kisseninneren, die beispielsweise durch Betätigung des Druckregulierungsventil durchgeführt wird, ergibt eine gleichmäßige Druckbeaufschlagung der verformbaren Kissenoberfläche, wodurch sie sich an die vergleichsweise dünne Hologrammaufnahmeschicht auf der Substratoberfläche anschmiegt und dadurch die Ist-Geometrie der Substratoberfläche annimmt.

Insbesondere kann bei dieser Ausführungsform der vorbestimmte erste Fluiddruck ein Unterdruck oder ein Überdruck in Bezug auf den herrschenden Umgebungsdruck, insbesondere Atmosphärendruck, sein, wodurch insbesondere eine Unterbombierung bzw. Überbombierung der verformbaren Kissenoberfläche relativ zur Soll-Geometrie bereitgestellt werden kann. Während oder nachdem das so vorgeformte Kissen an die Substratoberfläche mit der darauf aufgebrachten Hologrammaufnahmeschicht angelegt oder angedrückt wird, wird darin der vorbestimmte zweite Fluiddruck eingestellt, der bei dieser Variante gleich dem herrschenden Umgebungsdruck ist. Diese Druckänderung, beispielsweise durch das Öffnen des Druckregulierungsventils, ermöglicht bzw. bewirkt die Herstellung eines durchgehenden Flächenkontakts der verformbaren Kissenoberfläche mit der dünnen Hologrammaufnahmeschicht mit der darunter liegenden Substratoberfläche, wodurch die Kissenoberfläche deren Soll-Geometrie annimmt.

Auch andere Varianten der Fluiddruckänderung im Kissen können bei der genannten ersten Ausführungsform zum gewünschten Geometrieausgleich führen. So kann beispielsweise der vorbestimmte erste Fluiddruck dem herrschenden Umgebungsdruck, insbesondere Atmosphärendruck, entsprechen und der vorbestimmte zweite Fluiddruck ein Unterdruck in Bezug auf diesen sein, während das Kissen als Ganzes rückseitig mit einer Kraft gegen die Hologrammaufnahmeschicht gedrückt wird.

Gemäß einer zweiten Ausführungsform ist das aufblasbare Kissen mit einem Fluid, insbesondere Luft oder einem anderen Gas oder einer Flüssigkeit, und einem darin enthaltenen oder verteilten Festkörpermaterial gefüllt, wobei das Festkörpermaterial bei Vorhandensein des Fluids im Kissen weich und formbar ist und bei Fluidabzug aus dem Kissen hart wird und eine ihm dabei aufgeprägte Form hält. Beispielsweise kann das Kissen dabei ähnlich der als Vakuumschienmaterial bekannten Ruhigstellungstechnik eine lockere Füllung aus feinem Granulat, insbesondere Kunststoffkügelchen geeigneter Größe, aufweisen, wobei die Füllung weich und formbar ist, solange Luft im Kissen ist, und bei Luftabzug aus dem Kissen hart wird, da die einzelnen Granulatteilchen durch den Unterdruck aneinandergepresst werden. Alternativ kann es sich bei der Füllung beispielsweise auch um ein geeignetes formbares schaumartiges Material handeln, welches bei Evakuierung aushärtet und die Form hält. Für den Fluidabzug aus dem Kissen kann es beispielsweise einen geeigneten Anschluss für eine Vakuumpumpe aufweisen.

Auch bei dieser Ausführungsform wird das Kissen zunächst mit einer zu der Soll-Geometrie oder einer vorbestimmten Abweichung von dieser, beispielsweise unter- oder überbombiert, vorgeformten Kissenoberfläche bereitgestellt. Hierzu kann im Kissen insbesondere ein vorbestimmter Fluiddruck, etwa der herrschende Umgebungsdruck oder auch ein Über- oder Unterdruck, eingestellt sein.

Die Verformung der vorgeformten Kissenoberfläche zur Ist-Geometrie wird bei der zweiten Ausführungsform durch das rückseitige Andrücken des Kissens mit oder ohne den darauf aufgebrachten Holografie-Master an die Substratoberfläche mit oder ohne die darauf aufgebrachte Hologrammaufnahmeschicht bewirkt, und eine der verformbaren Kissenoberfläche dadurch aufgeprägte Form, nämlich die Ist-Geometrie der Substratoberfläche, durch Fluidabzug aus dem Kissen vom hart gewordenen Feststoffmaterial festgehalten bzw. eingefroren bzw. konserviert und bei der Durchführung der übrigen Schritte des vorliegenden Hologrammherstellungsverfahrens beibehalten.

Insbesondere kann auch beim Verfahren gemäß der zweiten Ausführungsform beim Schritt der Verformung der vorgeformten Kissenoberfläche zur Ist-Geometrie und/oder beim anschließenden Fluidabzug aus dem Kissen das Andrücken des Kissens an die Substratoberfläche durch eine rückseitige Krafteinwirkung auf das Kissen bewirkt oder unterstützt werden. Diese Druckkraft auf die Rückseite des Kissens kann auch hier beispielsweise durch eine beliebige geeignete mechanische Vorrichtung angelegt werden.

Gemäß einem weiteren Aspekt der Erfindung ist eine gebogene Substratscheibe mit einem darauf gemäß dem Verfahren der hierin dargelegten Art hergestellten Hologramm vorgesehen, gemäß Anspruch 8.

Die gebogene Substratscheibe ist dabei zum Einsatz als fester Bestandteil einer Fahrzeugscheibe ausgebildet. Beim Hologramm kann es sich insbesondere um ein holografisch optisches Element handeln. Dabei ist das Hologramm in einer auf der genannten toleranzbehafteten gebogenen Substratoberfläche der Substratscheibe aufgetragenen Hologrammaufnahmeschicht aufgenommen, insbesondere als ein Volumenhologramm, und die Hologrammaufnahme ist durch das Belichten der Hologrammaufnahmeschicht mit einem kohärenten Licht in einer zumindest für die Dauer der Belichtung bestehenden Hologrammaufnahmeanordnung der oben beschriebenen Art bewirkt worden, in der ein Holografie-Master in Form einer flexiblen Dünnschicht an die Hologrammaufnahmeschicht mit einem durchgehenden Flächenkontakt dazwischen und einer im Wesentlichen konstanten vorbestimmten Schichtdicke der Hologrammaufnahmeschicht durch ein aufblasbares Kissen mit einer der Ist-Geometrie der Substratoberfläche entsprechenden Kissenoberfläche angedrückt ist bzw. war.

Gemäß einem weiteren Aspekt der Erfindung ist eine Fahrzeugscheibe vorgesehen, die als ein Scheibenverbund ausgebildet ist. Der Scheibenverbund umfasst zum einen eine gebogene Substratscheibe mit einem darauf hergestellten Hologramm der oben beschriebenen Art als eine erste Scheibe des Scheibenverbunds. Ferner umfasst der Scheibenverbund eine zweite Scheibe, die mit der ersten Scheibe durch eine dazwischen liegende Verbindungsschicht, insbesondere aus einem Schmelzklebstoffs wie PVB (Polyvinylbutyral), verbunden ist, wobei das Hologramm auf einer der zweiten Scheibe zugewandten Oberfläche der ersten Scheibe ausgebildet ist. Der genannte Scheibenverbund kann daher insbesondere ein Verbund-Sicherheitsglas (VSG) darstellen. Die genannte Verbindung der beiden Scheiben des Verbunds kann insbesondere durch einen geeigneten Laminationsprozeß an sich bekannter Art implementiert sein.

Gemäß einem weiteren Aspekt der Erfindung ist ein Fahrzeug mit einer Fahrzeugscheibe der oben beschriebenen Art vorgesehen. Das Fahrzeug kann ein beliebiges Land-, Luft- oder Wasserfahrzeug, insbesondere ein Kraftfahrzeug, sein. Dabei kann die oben genannte erste Scheibe des Verbunds, an der das Hologramm mit dem Verfahren der hierin dargelegten Art erzeugt ist, insbesondere eine näher oder direkt an einem Fahrzeuginnenraum liegende Innenscheibe der Fahrzeugscheibe sein, während die zweite Scheibe eine näher oder direkt an der Außenumgebung des Fahrzeugs liegende Außenscheibe der Fahrzeugscheibe ist. Die Fahrzeugscheibe kann, muss aber nicht, zusätzlich zu den genannten zwei Scheiben noch weiter innen oder außen im Scheibenverbund liegende Schichten oder Scheiben aufweisen.

Beim Hologramm kann es sich insbesondere um ein holografisch optisches Element (HOE) handeln, das beispielsweise als Element einer Blickfeldanzeigevorrichtung der eingangs beschriebenen Art, insbesondere eines Head-Up-Displays (HUD), in einer Frontscheibe des Fahrzeugs integriert ist, um etwa die Funktion eines Konkavspiegels zu übernehmen. Alternativ kann das HOE mit einer anderen optischen Funktion ausgestattet sein, beispielsweise als ein winkelselektives Diffusor-Hologramm zur Darstellung von Anzeigeinhalten direkt auf der Fahrzeugscheibe, die dadurch als eine Art Leinwand verwendet werden kann, oder als ein Auskoppel-Hologramm für ein Waveguide-HUD, bei dem ein flächiges Waveguide in der Fahrzeugscheibe zur Darstellung von Inhalten für Insassen des Fahrzeugs ausgebildet ist.

### Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind rein schematisch, sie sind insbesondere nicht als maßstabsgetreu zu lesen. Es zeigen:

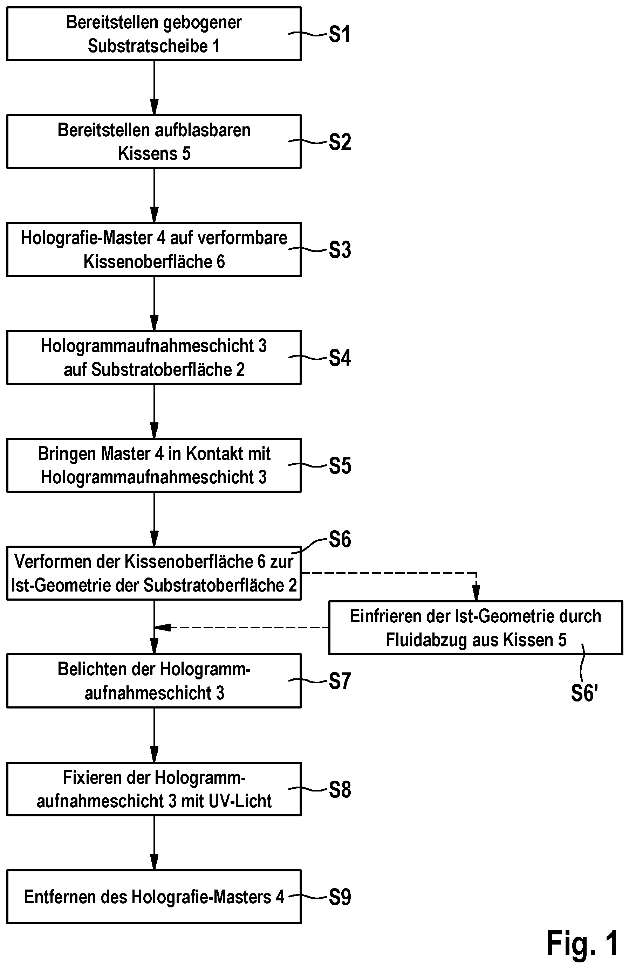

- Figur 1: ein Flussdiagramm des Verfahrens der hierin dargelegten Art zum Herstellen eines Hologramms auf einer gebogenen Substratscheibe;

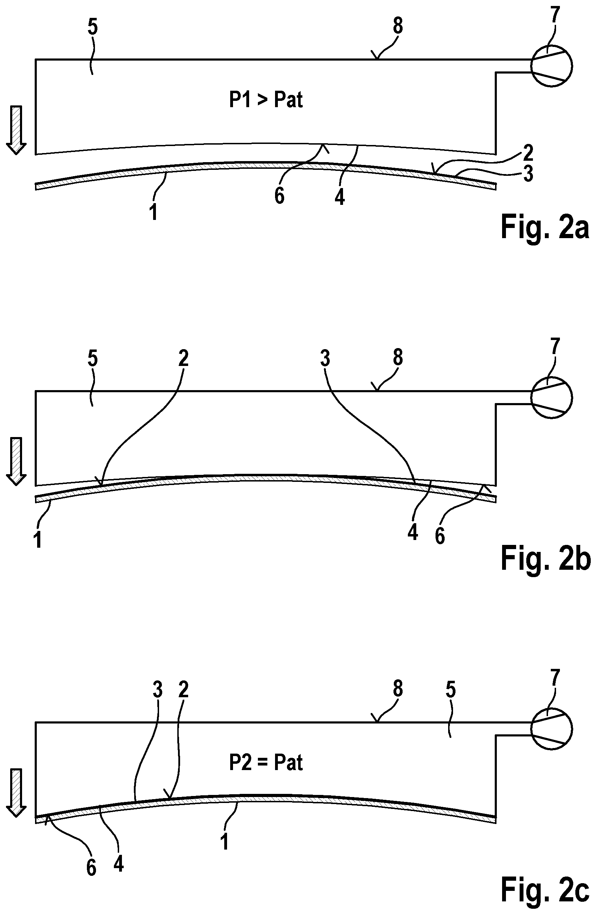

- Figur 2a-2c: schematische seitliche Querschnittsansichten einer gebogenen Substratscheibe mit darauf aufgebrachter Hologrammaufnahmeschicht und eines zum Andrücken eines Holografie-Masters daran verwendeten aufblasbaren Kissens zur Erläuterung von dessen Verformung zu einer Ist-Geometrie der Substratscheibe gemäß einer ersten Ausführungsform des Verfahrens der Fig. 1;

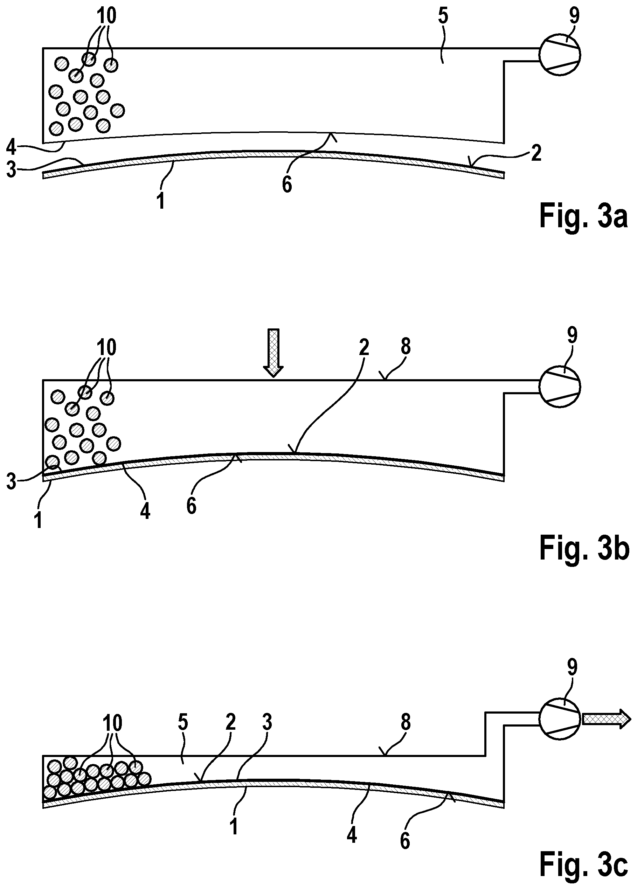

- Figur 3a-3c: schematische seitliche Querschnittsansichten einer gebogenen Substratscheibe mit darauf aufgebrachter Hologrammaufnahmeschicht und eines zum Andrücken eines Holografie-Masters daran verwendeten aufblasbaren Kissens zur Erläuterung von dessen Verformung zu einer Ist-Geometrie der Substratscheibe gemäß einer zweiten Ausführungsform des Verfahrens der Fig. 1.

### Beschreibung von Ausführungsformen

Alle weiter oben in der Beschreibung und in den nachfolgenden Ansprüchen erwähnten verschiedenen Ausführungsformen, Varianten und spezifischen Ausgestaltungsmerkmale des Verfahrens gemäß dem ersten Aspekt der Erfindung zum Herstellen eines Hologramms auf einer gebogenen Substratscheibe und der resultierenden Substratscheibe, der Fahrzeugscheibe und des Fahrzeugs gemäß den weiteren Aspekten der Erfindung können bei den in den in den Figuren 1 bis 3c gezeigten Beispielen implementiert sein. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale, die in den Fig. 1-3c gezeigt sind.

Fig. 1 zeigt ein Flussdiagramm des Verfahrens gemäß dem obigen ersten Aspekt der Erfindung zum Herstellen eines Hologramms auf einer gebogenen Substratscheibe, das nachfolgend zunächst anhand des in Fig. 2a-2c illustrierten Beispiels für die weiter oben beschriebene erste Ausführungsform dieses Verfahrens erläutert wird.

Figuren 2a bis 2c zeigen, jeweils in stark vereinfachten schematischen vertikalen Querschnittsansichten, drei bei der Durchführung des Verfahrens gemäß Fig. 1 nacheinander vorliegende gegenseitige Anordnungen einer gebogenen Substratscheibe 1 mit einer auf deren Substratoberfläche 2 aufgebrachten Hologrammaufnahmeschicht 3 und eines zum Andrücken eines Holografie-Masters 4 an die Hologrammaufnahmeschicht 3 verwendeten aufblasbaren Kissens 5 zur Erläuterung der gemäß der ersten Ausführungsform bewirkten Verformung einer Kissenoberfläche 6 zur der Ist-Geometrie der Substratoberfläche 2, die einer Toleranzabweichung von deren vorbekannter Soll-Geometrie unterliegt.

In diesem Beispiel beginnt das Verfahren gemäß Fig. 1 mit einem Schritt S1, bei dem die genannte dreidimensional gebogene Substratscheibe 1 bereitgestellt wird, die als Teil eines zukünftigen Bauteils, in diesem Fall einer Fahrzeugscheibe (nicht dargestellt), toleranzbehaftet ist und eine für die Hologrammherstellung vorgesehene Substratoberfläche 2 aufweist, deren Ist-Geometrie einer Toleranzabweichung gegenüber einer vorbestimmten, im Voraus bekannten gebogenen Soll-Geometrie unterliegt. Die gebogene dreidimensionale Soll- und Ist-Geometrie der Substratoberfläche 2 unterscheidet sich, wie beispielsweise in Fig. 2a angedeutet, deutlich von einer ebenen oder flachen Oberflächenform und entspricht in diesem Beispiel der 3D-Form der künftigen Fahrzeugscheibe. Die gebogene Substratscheibe 1 kann beispielsweise aus Glas oder Kunststoff gefertigt sein und insbesondere starr ausgebildet sein.

Bei einem weiteren Schritt S2 wird das aufblasbare Kissen 5 bereitgestellt, dessen durch geeignete Druckeinwirkung verformbare Kissenoberfläche 6 bereits zu der vorbestimmten Soll-Geometrie oder mit einer vorbestimmten Abweichung von dieser, beispielsweise unter- oder überbombiert, vorgeformt ist. Das aufblasbare Kissen 5 kann insbesondere als eine Polymer- oder Elastomer-Blase ausgebildet sein.

Bei dem in Fig. 2a-2c dargestellten Beispiel ist das aufblasbare Kissen 5 mit einem Fluid, in diesem Beispiel Luft, gefüllt und weist ein Druckregulierungsventil 7 zur Einstellung eines Fluiddrucks im Kissen 5 auf. Wie in Fig. 2a schematisch angedeutet, wird das Kissen 5 beim Schritt S2 mit einem vorbestimmten ersten Fluiddruck P1 bereitgestellt, hier einem leichten Überdruck im Vergleich zum herrschenden Umgebungsdruck (=Atmosphärendruck) Pat, wobei die verformbare Kissenoberfläche 6 gegenüber der oben genannten bekannten Soll-Geometrie der Substratoberfläche 2 überbombiert ist.

Bei einem weiteren Schritt S3 wird der Holografie-Master 4, der beispielsweise ein Oberflächenhologramm ist, das als wiederverwendbares Negativ des aufzunehmenden Hologramms dient, in Form einer flexiblen Dünnschicht auf die verformbare Kissenoberfläche 6 aufgebracht, so dass die Oberflächengeometrie des flexiblen Holografie-Masters 4 derjenigen der verformbaren Kissenoberfläche 6 gleich ist bzw. durch sie definiert ist. Hierzu kann der Master 4 insbesondere auch fest mit der flexiblen Kissenoberfläche 6 verbunden werden, beispielsweise mittels eines geeigneten Klebstoffs oder dergleichen.

Bei einem weiteren Schritt S4 wird eine Hologrammaufnahmeschicht 3, in diesem Beispiel eine flüssige Fotopolymerschicht, auf die Substratoberfläche 2 aufgebracht.

Die Schritte S1 bis S4 können für das in Fig. 2a-2c gezeigte Beispiel grundsätzlich in einer beliebigen Reihenfolge durchgeführt werden.

Wie in Fig. 2a und 2b gezeigt, wird in einem weiteren Schritt S5 der auf der verformbaren Kissenoberfläche 6 aufgebrachte Holografie-Master 4 in angedeuteter Pfeilrichtung auf die Substratoberfläche 2 und die darauf aufgebrachte Hologrammaufnahmeschicht 3 zubewegt, um den Holografie-Master 4 and der Hologrammaufnahmeschicht 3 anzulegen. Wie in Fig. 2b angedeutet, unterscheiden sich zunächst die Oberflächengeometrien des Holografie-Masters 4 einerseits und der dünnen Hologrammaufnahmeschicht 3, die im Wesentlichen der individuellen Ist-Geometrie der verwendeten Substratoberfläche 2 folgt, andererseits deutlich, sodass der Holografie-Masters 4 in Fig. 2b zunächst nur stellenweise an der Hologrammaufnahmeschicht 3 anliegt. Wie Fig. 2b zeigt, ist die vorgeformte Kissenoberfläche 6 dabei schwächer gekrümmt als die Substratoberfläche 2, um sicherzustellen, dass der Erstkontakt des Holografie-Masters 4 mit der Hologrammaufnahmeschicht 3 in etwa in der Mitte der Substratoberfläche 2 entsteht. Letzteres stellt beim vorliegenden Verfahren eine besonders günstige Ausgangsvoraussetzung für die nachfolgende Toleranzanpassung zwischen den beiden Kontaktflächen, insbesondere damit die Luft bei der Herstellung eines durchgehenden Flächenkontakts dazwischen seitlich nach außen entweichen kann.

Zum Gewährleisten einer für den bevorstehenden Belichtungsprozess erforderlichen Hologrammaufnahmeanordnung mit einem durchgehender Flächenkontakt zwischen dem Holografie-Master 4 und der Hologrammaufnahmeschicht 3 bei einer im Wesentlichen konstanten vorbestimmten Schichtdicke der Hologrammaufnahmeschicht 3 wird daher in einem weiteren Schritt S6 ein Geometrietoleranzausgleich von der vorbestimmten Soll-Geometrie bzw. in diesem Beispiel diesbezüglich leicht unterbombiert vorgeformten Kissenoberfläche 6 mit dem darauf aufgebrachten Holografie-Master 4 zu der individuellen Ist-Geometrie der Substratoberfläche 2 mit der darauf aufgebrachten Hologrammaufnahmeschicht 3 bewirkt.

Wie in Fig. 2c gezeigt, wird dieser Geometrietoleranzausgleich in diesem Beispiel durch Beaufschlagung der verformbaren Kissenoberfläche 6 mit dem Atmosphärendruck Pat, beispielsweise durch das Öffnen des Ventils 7, bewirkt, während sie in Kontakt mit der Hologrammaufnahmeschicht 3 ist. Mit anderen Worten wird nach oder bei dem Anlegen des Holografie-Masters 4 an der Hologrammaufnahmeschicht 3 der Fluiddruck im Kissen 5 zu einem vorbestimmten zweiten Fluiddruck P2=Pat geändert, der in diesem Beispiel gleich dem herrschenden Umgebungsdruck Pat ist. Diese Druckänderung im Kissen 5 bewirkt die Herstellung eines durchgehenden Flächenkontakts zwischen dem auf der verformbaren Kissenoberfläche 6 aufgebrachten Holografie-Master 4 mit der dünnen Hologrammaufnahmeschicht 3, wodurch die Kissenoberfläche 6 die Soll-Geometrie der darunter liegenden Substratoberfläche 2 annimmt.

Der genannte Geometrietoleranzausgleich kann insbesondere durch ein leichtes Andrücken des Kissens 5 an die Substratoberfläche 2 durch eine rückseitige Krafteinwirkung auf das Kissen 5 unterstützt werden. Eine hierzu geeignete Druckkraft auf die Rückseite 8 des Kissens 5 kann beispielsweise durch eine mechanische Vorrichtung mit Federwirkung oder dergleichen (nicht gezeigt) angelegt werden.

Es folgt in einem Schritt S7 das Belichten der Hologrammaufnahmeschicht 3 in dieser Hologrammaufnahmeanordnung mit einem geeigneten kohärenten Licht, beispielsweise durch die Substratscheibe 1 hindurch, wodurch in der Hologrammaufnahmeschicht 3 das gewünschte Hologramm erzeugt wird. Anschließend kann die Hologrammaufnahmeschicht 3 in einem Schritt S8 mit geeignetem UV-Licht fixiert werden. Bei der Belichtung und der anschließenden Fixierung mit UV-Licht härtet das flüssige Fotopolymer aus, wonach das Kissen 5 mit dem Holografie-Master 4 von der fertiggestellten Substratscheibe 1 mit dem Hologramm in einem Schritt S9 entfernt wird.

Fig. 3a-3c zeigen ein Beispiel für die weiter oben beschriebene zweite Ausführungsform des Verfahrens der hierin dargelegten Art. Ähnlich zu Fig. 2a-2c zeigen Fig. 3a-3c, jeweils in stark vereinfachten schematischen vertikalen Querschnittsansichten, drei bei der Durchführung des Verfahrens gemäß Fig. 1 nacheinander vorliegende gegenseitige Anordnungen einer gebogenen Substratscheibe 1 mit einer auf deren Substratoberfläche 2 aufgebrachten Hologrammaufnahmeschicht 3 und eines zum Andrücken eines Holografie-Masters 4 an die Hologrammaufnahmeschicht 3 verwendeten aufblasbaren Kissens 5 zur Erläuterung der gemäß der zweiten Ausführungsform bewirkten Verformung einer Kissenoberfläche 6 zur der Ist-Geometrie der Substratoberfläche 2, die einer Toleranzabweichung von deren vorbekannter Soll-Geometrie unterliegt.

Das in Figuren 3a bis 3c gezeigte Beispiel unterscheidet sich von demjenigen der Fig. 2a-2c hauptsächlich nur durch die Ausgestaltung des Kissens 5 und die Art und Weise der Durchführung des für die Hologrammaufnahmeanordnung der hierin beschriebenen Art erforderlichen Geometrietoleranzausgleichs zwischen der vorgeformten Kissenoberfläche 6 und der individuellen Ist-Geometrie der Substratoberfläche 2. Nachfolgend werden nur diejenigen Schritte des in Fig. 1 geschilderten Verfahrens beschrieben, die sich von dem Beispiel gemäß Fig. 2a-2c unterscheiden, während die übrigen Verfahrensschritte identisch sein können und daher nicht wiederholt im Detail beschrieben werden.

Wie in Fig. 3a gezeigt, ist das beim Schritt S2 gemäß der Fig. 1 bereitgestellte aufblasbare Kissen 5 gemäß der zweiten Ausführungsform des vorliegenden Verfahrens mit einem Fluid, in diesem Beispiel Luft, und einem darin verteilten Festkörpermaterial 10, in diesem Beispiel losen Granulat z. B. aus Kunststoff gefüllt. Bei Vorhandensein der Luft im Kissen 5 ist das Festkörpermaterial 10 weich und formbar, sodass die Kissenoberfläche 6 bezüglich der im Voraus bekannten vorbestimmten Soll-Geometrie der Substratoberfläche 2 beispielsweise leicht unterbombiert vorgeformt sein kann und bei oder nach dem Anlegen der Kissenoberfläche 6 an die Substratoberfläche 2 durch das rückseitige Andrücken des Kissens 5 mit einer geeigneten Kraft beim Schritt S6 deren individuelle Ist-Geometrie annehmen kann, wie in Fig. 3b gezeigt.

Wie Fig. 3c zeigt, kann die beim Schritt S6 (Fig. 3b) erreichte geometrieausgleichende Form der Kissenoberfläche 6 gemäß der zweiten Ausführungsform der Erfindung bei einem darauffolgenden optionalen Schritt S6' durch Fluidabzug aus dem Kissen 5, in diesem Beispiel Evakuierung durch eine Vakuumpumpe 9, "eingefroren" werden, da das Festkörpermaterial 10 durch den Unterdruck zusammengedrückt wird und die ihm dabei aufgeprägte Form hält, solange das Kissen 5 nicht wieder mit Luft gefüllt wird. Insbesondere kann hierzu während der Evakuierung die oben genannte zum Geometrietoleranzausgleich an der Rückseite 8 des Kissens 5 angelegte Druckkraft beibehalten werden.

Das evakuierte Kissen 5 kann somit die einmal erreichte Ist-Geometrie seiner Kissenoberfläche 6 ohne weitere Krafteinwirkung wie rückseitiges Andrücken mit geeigneter Kraft und dergleichen beibehalten, es genügt somit ein bloßes Anlegen des Kissens 5 mit dem darauf aufgebrachten Holografie-Master 4 an der Hologrammaufnahmeschicht 3 zur Herstellung eines durchgehenden Flächenkontakts dazwischen unter Einhaltung der vorbestimmten Schichtdicke der Hologrammaufnahmeschicht 3. Dies erleichtert zum einen eine präzise Einhaltung der erforderlichen Hologrammaufnahmeanordnung beim nachfolgenden Belichtungsschritt S7. Zudem kann der Geometrieausgleich daher bei dieser Ausführungsform auch vor den oben beschriebenen Schritten S3 und/oder S4, d. h. vor dem Aufbringen des Holografie-Masters 4 auf die verformbare Kissenoberfläche 6 und/oder vor dem Aufbringen der Hologrammaufnahmeschicht 3 auf die Substratoberfläche 2 durchgeführt werden.

### Bezugszeichenliste

- 1: gebogene Substratscheibe
- 2: Substratoberfläche
- 3: Hologrammaufnahmeschicht
- 4: Holografie-Master
- 5: aufblasbares Kissen
- 6: verformbare Kissenoberfläche
- 7: Druckregulierungsventil
- 8: Rückseite des Kissens
- 9: Vakuumpumpe
- 10: Festkörpermaterial
- P1: vorbestimmter erster Fluiddruck
- P2: vorbestimmter zweiter Fluiddruck
- Pat: herrschender Umgebungsdruck

## Patentansprüche

1. Verfahren zum Herstellen eines Hologramms auf einer gebogenen Substratscheibe (1), mit den Schritten:
- Bereitstellen (S1) einer gebogenen Substratscheibe (1) mit einer Substratoberfläche (2), deren Ist-Geometrie einer Toleranzabweichung gegenüber einer vorbestimmten Soll-Geometrie unterliegt;
- Bereitstellen (S2) eines aufblasbaren Kissens (5) mit einer durch Druckeinwirkung verformbaren Kissenoberfläche (6), die zu der vorbestimmten Soll-Geometrie oder mit einer vorbestimmten Abweichung von dieser vorgeformt ist,
- Aufbringen (S3) eines Holografie-Masters (4) in Form einer flexiblen Dünnschicht auf die verformbare Kissenoberfläche (6);
- Aufbringen (S4) einer Hologrammaufnahmeschicht (3) auf die Substratoberfläche (2);
- Andrücken oder Anlegen des Holografie-Masters (4) an die Hologrammaufnahmeschicht (3) mittels der zur Ist-Geometrie verformten Kissenoberfläche (6), wodurch ein durchgehender Flächenkontakt dazwischen mit einer im Wesentlichen konstanten vorbestimmten Schichtdicke der Hologrammaufnahmeschicht (3) erzielt wird; und
- Belichten (S7) der Hologrammaufnahmeschicht (3) in dieser Hologrammaufnahmeanordnung mit einem kohärenten Licht zum Ausbilden eines durch den Holografie-Master (4) definierten Hologramms in der Hologrammaufnahmeschicht (3).

2. Verfahren nach Anspruch 1, wobei
- die Verformung (S6) der vorgeformten Kissenoberfläche (6) zur Ist-Geometrie vor, bei oder nach dem Anlegen oder Andrücken des Kissens (5) mit dem darauf aufgebrachten Holografie-Master (4) an die Hologrammaufnahmeschicht (3) dadurch bewirkt oder unterstützt wird, dass die vorgeformte Kissenoberfläche (6) gegen die Substratoberfläche (2) mit oder ohne die darauf aufgebrachte Hologrammaufnahmeschicht (3) mit einer Druckkraft gedrückt wird.

3. Verfahren nach Anspruch 1 oder 2, wobei
- die Verformung (S6) der vorgeformten Kissenoberfläche (6) zur Ist-Geometrie vor, bei oder nach dem Anlegen des Kissens (5) mit dem darauf aufgebrachten Holografie-Master (4) an die Hologrammaufnahmeschicht (3) dadurch bewirkt oder unterstützt wird, dass das Kissen (5) rückseitig an die Substratoberfläche (2) mit oder ohne die darauf aufgebrachte Hologrammaufnahmeschicht (3) angedrückt wird.

4. Verfahren nach einem der vorhergehenden Ansprüche, wobei das aufblasbare Kissen (5) mit einem Fluid gefüllt ist, mindestens ein Druckregulierungsventil (7) zur Einstellung eines Fluiddrucks im Kissen (5) umfasst und mit einem vorbestimmten ersten Fluiddruck (P1) bereitgestellt wird, bei dem die verformbare Kissenoberfläche (6) die Soll-Geometrie oder eine vorbestimmte Abweichung von dieser aufweist, und
- die Verformung (S6) der vorgeformten Kissenoberfläche (6) zur Ist-Geometrie durch eine Fluiddruckänderung im Kissen (5) zu einem vorbestimmten zweiten Fluiddruck (P2) bei oder nach dem Anlegen oder Andrücken des Kissens (5) mit dem darauf aufgebrachten Holografie-Master (4) an die Substratoberfläche (2) mit der darauf aufgebrachten Hologrammaufnahmeschicht (3) bewirkt wird.

5. Verfahren nach Anspruch 4, wobei
- der vorbestimmte erste Fluiddruck (P1) ein Unterdruck oder Überdruck in Bezug auf den herrschenden Umgebungsdruck (Pat) ist, und der vorbestimmte zweite Fluiddruck (P2) dem herrschenden Umgebungsdruck (Pat) entspricht.

6. Verfahren nach einem der Ansprüche 1 bis 3, wobei das aufblasbare Kissen (5) mit einem Fluid und einem darin enthaltenen oder verteilten Festkörpermaterial (10) gefüllt ist, das bei Vorhandensein des Fluids beliebig formbar ist und bei Fluidabzug aus dem Kissen (5) aushärtet und eine ihm dabei aufgeprägte Form hält, wobei
- das Kissen (5) mit der vorgeformten Kissenoberfläche (6) bei einem vorbestimmten Fluiddruck im Kissen (5) bereitgestellt wird;
- die Verformung (S6) der vorgeformten Kissenoberfläche (6) zur Ist-Geometrie durch das Andrücken des Kissens (5) mit oder ohne den darauf aufgebrachten Holografie-Master (4) an die Substratoberfläche (2) mit oder ohne die darauf aufgebrachte Hologrammaufnahmeschicht (3) bewirkt wird; und
- eine der verformbaren Kissenoberfläche (6) dadurch aufgeprägte Form durch Fluidabzug (S6') aus dem Kissen (5) festgehalten und bei der Durchführung der übrigen genannten Verfahrensschritte (S1-S5, S7) beibehalten wird.

7. Verfahren nach Anspruch 6, wobei beim Schritt der Verformung (S6) der vorgeformten Kissenoberfläche (6) zur Ist-Geometrie und vorzugsweise auch beim anschließenden Fluidabzug (S6') aus dem Kissen (5)
- das Andrücken des Kissens (5) an die Substratoberfläche (2) durch eine rückseitige Krafteinwirkung auf das Kissen (5) bewirkt oder unterstützt wird.

8. Gebogene Substratscheibe (1) mit einem darauf gemäß einem Verfahren nach einem der vorhergehenden Ansprüche hergestellten Hologramm, die zum Einsatz als fester Bestandteil einer Fahrzeugscheibe ausgebildet ist.

9. Fahrzeugscheibe, die als ein Scheibenverbund ausgebildet ist, der Folgendes umfasst:
- eine gebogene Substratscheibe (1) mit einem darauf hergestellten Hologramm gemäß Anspruch 8 als eine erste Scheibe des Scheibenverbunds und
- eine zweite Scheibe, die mit der ersten Scheibe durch eine dazwischen liegende Verbindungsschicht verbunden ist, wobei das Hologramm auf einer der zweiten Scheibe zugewandten Oberfläche der ersten Scheibe ausgebildet ist.

10. Fahrzeug mit einer Fahrzeugscheibe gemäß Anspruch 9, wobei
- die erste Scheibe eine näher oder direkt an einem Fahrzeuginnenraum liegende Innenscheibe der Fahrzeugscheibe und die zweite Scheibe eine näher oder direkt an der Außenumgebung des Fahrzeugs liegende Außenscheibe der Fahrzeugscheibe ist.

## Claims

1. Method of producing a hologram on a curved substrate pane (1), having the steps of:
- providing (S1) a curved substrate pane (1) with a substrate surface (2), the actual geometry of which is subject to a variance in tolerance compared to a predetermined target geometry;
- providing (S2) an inflatable cushion (5) with a cushion surface (6) which is shapeable by the action of pressure and has been preshaped to the predetermined target geometry or with a predetermined variance therefrom;
- applying (S3) a holography master (4) in the form of a flexible thin layer to the shapeable cushion surface (6);
- applying (S4) a hologram recording layer (3) to the substrate surface (2);
- pressing or laying the holography master (4) onto the hologram recording layer (3) by means of the cushion surface (6) shaped to the actual geometry, which achieves full-area contact between the two with an essentially constant predetermined layer thickness of the hologram recording layer (3); and
- exposing (S7) the hologram recording layer (3) in this hologram recording arrangement with a coherent light to form a hologram defined by the holography master (4) in the hologram recording layer (3).

2. Method according to Claim 1, wherein
- the shaping (S6) of the preshaped cushion surface (6) to the actual geometry before, during or after the laying or pressing of the cushion (5) with the holography master (4) applied thereto onto the hologram recording layer (3) is brought about or assisted by pressing the preshaped cushion surface (6) against the substrate surface (2) with or without the hologram recording layer (3) applied thereto with a compression force.

3. Method according to Claim 1 or 2, wherein
- the shaping (S6) of the preshaped cushion surface (6) to the actual geometry before, during or after the laying of the cushion (5) with the holography master (4) applied thereto onto the hologram recording layer (3) is brought about or assisted by pressing the cushion (5) on the reverse side onto the substrate surface (2) with or without the hologram recording layer (3) applied thereto.

4. Method according to any of the preceding claims, wherein the inflatable cushion (5) is filled with a fluid, comprises at least one pressure regulation valve (7) for adjustment of the fluid pressure in the cushion (5) and is provided with a predetermined first fluid pressure (P1) at which the shapeable cushion surface (6) has the target geometry or a predetermined variance therefrom, and
- the shaping (S6) of the preshaped cushion surface (6) to give the actual geometry is brought about by a change in fluid pressure in the cushion (5) to a predetermined second fluid pressure (P2) during or after the application or pressing of the cushion (5) with the holography master (4) applied thereto to the substrate surface (2) with the hologram recording layer (3) applied thereto.

5. Method according to Claim 4, wherein
- the predetermined first fluid pressure (P1) is a reduced pressure or elevated pressure in relation to the existing ambient pressure (Pat), and the predetermined second fluid pressure (P2) corresponds to the existing ambient pressure (Pat).

6. Method according to any of Claims 1 to 3, wherein the inflatable cushion (5) is filled with a fluid and a solid-state material (10) which is present or distributed therein and which is shapeable as desired in the presence of the fluid and hardens when fluid is withdrawn from the cushion (5) and maintains a shape that can be imparted thereto, wherein
- the cushion (5) with the preshaped cushion surface (6) is provided at a predetermined fluid pressure in the cushion (5);
- the shaping (S6) of the preshaped cushion surface (6) to the actual geometry is brought about by the pressing of the cushion (5) with or without the holography master (4) applied thereto onto the substrate surface (2) with or without the hologram recording layer (3) applied thereto; and
- a shape imparted thereby to the shapeable cushion surface (6) is fixed by withdrawal of fluid (S6') from the cushion (5) and is maintained in the performance of the other method steps mentioned (S1-S5, S7).

7. Method according to Claim 6, wherein the step of shaping (S6) the preshaped cushion surface (6) to the actual geometry and preferably also in the subsequent withdrawal of fluid (S6') from the cushion (5) comprises
- bringing about or assisting the pressing of the cushion (5) onto the substrate surface (2) by a force applied to the reverse side of the cushion (5).

8. Curved substrate pane (1) with a hologram produced thereon by a method according to any of the preceding claims, designed for use as a fixed constituent of a vehicle windowpane.

9. Vehicle windowpane designed as a pane composite and comprising the following:
- a curved substrate pane (1) with a hologram according to Claim 8 produced thereon as a first pane of the composite pane and
- a second pane bonded to the first pane by a bonding layer between the two, wherein the hologram is formed on a surface of the first pane facing the second pane.

10. Vehicle having a vehicle windowpane according to Claim 9, wherein
- the first pane is an inner pane of the vehicle windowpane lying closer to or directly adjoining a vehicle interior, and the second pane is an outer pane of the vehicle windowpane lying closer or directly adjoining the exterior environment of the vehicle.

## Revendications

1. Procédé de production d'un hologramme sur un disque de substrat incurvé (1), avec les étapes suivantes :
- la fourniture (S1) d'un disque de substrat (1) incurvé avec une surface de substrat (2), dont la géométrie réelle est sujette à un écart de tolérance par rapport à une géométrie de consigne prédéterminée ;
- la fourniture (S2) d'un coussin gonflable (5) ayant une surface de coussin (6) déformable par l'action de pression, qui est préformée à la géométrie de consigne prédéterminée ou avec un écart prédéterminé par rapport à celle-ci,
- l'application (S3) d'un hologramme maître (4) sous la forme d'une couche mince flexible sur la surface de coussin déformable (6) ;
- l'application (S4) d'une couche de réception d'hologramme (3) sur la surface de substrat (2) ;
- la pression ou l'application de l'hologramme maître (4) sur la couche de réception d'hologramme (3) au moyen de la surface de coussin (6) déformée à la géométrie réelle, ce qui permet d'obtenir un contact superficiel continu entre elles avec une épaisseur de couche prédéterminée essentiellement constante de la couche de réception d'hologramme (3) ; et
- l'exposition (S7) de la couche de réception d'hologramme (3) dans cet agencement de réception d'hologramme à une lumière cohérente pour réaliser un hologramme défini par l'hologramme maître (4) dans la couche de réception d'hologramme (3).

2. Procédé selon la revendication 1, dans lequel
- la déformation (S6) de la surface de coussin préformée (6) à la géométrie réelle avant, pendant ou après l'application ou la pression du coussin (5) avec l'hologramme maître (4) appliqué sur celui-ci contre la couche de réception d'hologramme (3) est provoquée ou soutenue par le fait que la surface de coussin préformée (6) est pressée avec une force de pression contre la surface de substrat (2) avec ou sans la couche de réception d'hologramme (3) appliquée sur celle-ci.

3. Procédé selon la revendication 1 ou la revendication 2, dans lequel
- la déformation (S6) de la surface de coussin préformée (6) à la géométrie réelle avant, pendant ou après l'application du coussin (5) avec l'hologramme maître (4) appliqué sur celui-ci contre la couche de réception d'hologramme (3) est provoquée ou soutenue par le fait que le coussin (5) est pressé du côté arrière contre la surface de substrat (2) avec ou sans la couche de réception d'hologramme (3) appliquée sur celle-ci.

4. Procédé selon l'une quelconque des revendications précédentes, dans lequel le coussin gonflable (5) est rempli d'un fluide, comprend au moins une soupape de régulation de pression (7) pour ajuster une pression de fluide dans le coussin (5) et est fourni avec une première pression de fluide prédéterminée (P1), à laquelle la surface de coussin déformable (6) présente la géométrie de consigne ou un écart prédéterminé par rapport à celle-ci, et
- la déformation (S6) de la surface de coussin préformée (6) à la géométrie réelle est effectuée par un changement de la pression de fluide dans le coussin (5) à une deuxième pression de fluide prédéterminée (P2) pendant ou après l'application ou la pression du coussin (3) avec l'hologramme maître (4) appliqué sur celui-ci sur la surface de substrat (2) avec la couche de réception d'hologramme (5) appliquée sur celle-ci.

5. Procédé selon la revendication 4, dans lequel
- la première pression de fluide prédéterminée (P1) est une dépression ou une surpression par rapport à la pression ambiante régnante (Pat), et la deuxième pression de fluide prédéterminée (P2) correspond à la pression ambiante régnante (Pat).

6. Procédé selon l'une quelconque des revendications 1 à 3, dans lequel le coussin gonflable (5) est rempli d'un fluide et d'un matériau solide (10) contenu ou réparti dans celui-ci, qui est malléable à volonté en présence du fluide et qui durcit lors de l'extraction de fluide hors du coussin (5) et conserve alors la forme qui lui a été donnée,
- le coussin (5) avec la surface de coussin préformée (6) étant fourni à une pression de fluide prédéterminée dans le coussin (5) ;
- la déformation (S6) de la surface de coussin préformée (6) à la géométrie réelle étant provoquée par la pression du coussin (5) avec ou sans l'hologramme maître (4) appliqué sur celui-ci contre la surface de substrat (2) avec ou sans la couche de réception d'hologramme (3) appliquée sur celle-ci ; et
- une forme ainsi donnée à la surface de coussin déformable (6) étant maintenue par extraction de fluide (S6') hors du coussin (5) et étant conservée lors de l'exécution des autres étapes de procédé (S1-S5, S7) mentionnées.

7. Procédé selon la revendication 6, dans lequel, lors de l'étape de déformation (S6) de la surface de coussin préformée (6) à la géométrie réelle et de préférence également lors de l'extraction de fluide ultérieure (S6') du coussin (5)
- la pression du coussin (5) contre la surface de substrat (2) est provoquée ou soutenue par une action de force du côté arrière sur le coussin (5).

8. Disque de substrat incurvé (1) sur lequel un hologramme est produit par un procédé selon l'une quelconque des revendications précédentes, qui est réalisé pour être utilisé en tant que constituant fixe d'un vitrage de véhicule.

9. Vitrage de véhicule qui est conçu sous la forme d'un vitrage composite comprenant :
- un disque de substrat incurvé (1) avec un hologramme réalisé sur elle selon la revendication 8, en tant que première vitre du vitrage composite, et
- une deuxième vitre reliée à la première vitre par une couche de liaison intercalée, l'hologramme étant formé sur une surface de la première vitre tournée vers la deuxième vitre.

10. Véhicule comprenant un vitrage de véhicule selon la revendication 9, dans lequel
- la première vitre est une vitre intérieure du vitrage de véhicule située plus près ou directement à l'intérieur d'un habitacle de véhicule et la deuxième vitre est une vitre extérieure du vitrage de véhicule située plus près ou directement à l'extérieur du véhicule.
